(19) 

**Europäisches Patentamt**
**European Patent Office**
**Office européen des brevets**

(11) **EP 4 629 346 A1**

(12) **EUROPEAN PATENT APPLICATION**
published in accordance with Art. 153(4) EPC

(43) Date of publication:
08.10.2025 Bulletin 2025/41

(21) Application number: 23913038.8

(22) Date of filing: 29.12.2023

(51) International Patent Classification (IPC):
$H01M\ 4/62^{(2006.01)}$    $H01M\ 4/13^{(2010.01)}$
$H01M\ 4/139^{(2010.01)}$    $H01M\ 4/04^{(2006.01)}$
$H01M\ 10/052^{(2010.01)}$

(52) Cooperative Patent Classification (CPC):
H01M 4/04; H01M 4/13; H01M 4/139; H01M 4/62;
H01M 10/052; Y02E 60/10

(86) International application number:
PCT/KR2023/022030

(87) International publication number:
WO 2024/144364 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 KR 20220188383

(71) Applicant: LG Energy Solution, Ltd.
Seoul 07335 (KR)

(72) Inventors:
• KWAK, Sang-Min
  Daejeon 34122 (KR)
• LEE, Ho-Chan
  Daejeon 34122 (KR)

• KANG, Seong-Wook
  Daejeon 34122 (KR)
• KWON, Soon-Hyung
  Daejeon 34122 (KR)
• YOON, Kyung-Hwan
  Daejeon 34122 (KR)
• LEE, Ki-Seok
  Daejeon 34122 (KR)
• LEE, Nam-Jeong
  Daejeon 34122 (KR)
• HAN, Jae-Sung
  Daejeon 34122 (KR)
• PARK, Moon-Soo
  Daejeon 34122 (KR)

(74) Representative: Hoffmann Eitle
Patent- und Rechtsanwälte PartmbB
Arabellastraße 30
81925 München (DE)

(54) **ELECTRODE, SECONDARY BATTERY COMPRISING SAME, AND MANUFACTURING METHOD THEREFOR**

(57)    An electrode, a secondary battery including the same and an energy storage system are disclosed, and the electrode includes an electrode current collector; and an electrode layer disposed on the electrode current collector and including an active material, a conductive material and a binder, wherein the binder includes a fluorine-based polymer and a modified polyolefin, the fluorine-based binder is polytetrafluoroethylene (PTFE), the modified polyolefin includes a carboxylic acid anhydride derived functional group, and an amount of the modified polyolefin is from 2 to 40 parts by weight based on 100 parts by weight of the binder.

FIG. 1a

100

110  120  130

EP 4 629 346 A1

**Description**

TECHNICAL FIELD

The present disclosure relates to an electrode, a secondary battery including the same and a method for manufacturing the same, and more particularly, to an electrode with improved flexibility, a secondary battery including the same and a method for manufacturing the same.

The present application claims priority to Korean Patent Application No. 10-2022-0188383 filed on December 29, 2022 in the Republic of Korea, the disclosure of which is incorporated herein by reference.

BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. The most common secondary batteries are lithium secondary batteries, and lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and they have a diverse range of applications including use as an auxiliary power source via a grid.

A process of manufacturing a lithium secondary battery largely includes three steps, an electrode manufacturing process, an electrode assembly manufacturing process and a formation process. The electrode manufacturing process includes an electrode material mixing process, an electrode coating process, a drying process, a rolling process, a slitting process and a winding process.

The electrode material mixing process is a process of mixing the components for forming an electrode active layer in which electrochemical reaction actually occurs in the electrode, and specifically, an electrode active material that is the essential element of the electrode and an additive, for example, a conductive material, fillers, a binder for holding powder particles together and adhesion to the current collector, and a solvent for providing viscosity and dispersing powder are mixed together to prepare a flowable slurry.

The electrode coating process of coating the slurry on the electrically conductive current collector, and the drying process for removing the solvent included in the electrode material mixture slurry are performed, followed by electrode rolling, to manufacture an electrode with a predetermined thickness.

During the drying, defects such as pinholes or cracks may occur in the electrode active layer due to evaporation of the solvent included in the electrode material mixture. Additionally, the active layer is not uniformly dried all over the entire inner/outer area, and due to a difference in solvent evaporation rate, some regions get dried earlier and powder at the corresponding regions float, and some other regions get dried later at a time interval, resulting in low quality of the electrode.

To solve this problem, efforts have been devoted to dryers for uniformly drying the inner and outer area of the active layer and adjusting the solvent evaporation rate, but these dryers are very expensive and require a considerate amount of costs and time to operate them, so it is disadvantageous in terms of manufacturing process.

Recently, many studies are being made to manufacture dry electrodes without solvents.

A dry electrode is generally manufactured by laminating a freestanding film including an active material, a binder and a conductive material on a current collector.

The existing dry electrode is manufactured by mixing the active material, a carbon material as the conductive material and the fibrillatable binder together using a blender, fibrillating the binder through high shear mixing such as jet-milling, and calendaring the mixture into a film shape to form the freestanding film. Subsequently, the freestanding film formed after the calendaring is laminated on the current collector.

In the existing dry electrode manufacturing process, to ensure adhesion strength in the process of laminating the dry film with the current collector, the current collector having primer coating is used, but an additional cost is incurred.

Therefore, there is an urgent need for development of dry electrode manufacturing technology to solve the problem.

SUMMARY

Technical Problem

The present disclosure is designed to solve the above-described problem, and therefore the present disclosure is directed to providing an electrode with improved electrode adhesion strength, a secondary battery including the same and a method for manufacturing the same.

Technical Solution

To solve the above-described problem, according to an aspect of the present disclosure, there is provided an electrode of the following embodiment.

According to a first embodiment, there is provided the electrode including an electrode current collector; and an electrode layer disposed on the electrode current collector, and including an active material, a conductive material and a binder, wherein the binder includes a fluorine-based polymer and a modified polyolefin, wherein the fluorine-based binder is polytetrafluoroethylene (PTFE), wherein the modified polyolefin includes a carboxylic acid anhydride derived functional group, and wherein an amount of the modified polyolefin is from 2 to 40 parts by weight based on 100 parts by weight of the binder.

According to a second embodiment, in the first embodiment, the amount of the modified polyolefin may be from 3 to 40 parts by weight based on 100 parts by weight of the binder.

According to a third embodiment, in the first or second embodiment, a Melt Index (MI) of the modified polyolefin may be 50g/10min or less.

According to a fourth embodiment, in any one of the first to third embodiments, a melting point of the modified polyolefin may be 175°C or less.

According to a fifth embodiment, in any one of the first to fourth embodiments, the modified polyolefin may include at least one of a modified polyethylene or a modified polypropylene.

According to a sixth embodiment, in any one of the first to fifth embodiments, the modified olefin may be a polymer including an olefin derived repeat unit, the olefin derived repeat unit may be derived from an olefin including at least one of ethylene or propylene, and the carboxylic acid anhydride derived functional group may be derived from carboxylic acid anhydride including maleic anhydride, glutaric anhydride, phthalic anhydride, trimellitic anhydride, pyromellitic monoanhydride, pyromellitic dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride or two or more of them.

According to a seventh embodiment, in any one of the first to sixth embodiments, the modified polyolefin may be a modified polyethylene.

According to an eighth embodiment, in any one of the first to seventh embodiments, the modified polyolefin may include at least one of polyethylene including a maleic anhydride derived functional group or polypropylene including a maleic anhydride derived functional group.

According to a ninth embodiment, in any one of the first to eighth embodiments, an amount of the carboxylic acid anhydride derived functional group in the modified polyolefin may be from 0.5 to 20 mol%.

According to a tenth embodiment, in any one of the first to ninth embodiments, the binder may be fibrillated and binds the active material, and the conductive material.

According to an eleventh embodiment, in any one of the first to tenth embodiments, the active material may be a positive electrode active material or a negative electrode active material.

According to a twelfth embodiment, in any one of the first to eleventh embodiments, an amount of the active material may be from 80 to 98 parts by weight, an amount of the conductive material may be from 0.5 to 10 parts by weight, an amount of the fluorine-based polymer may be from 0.5 to 5 parts by weight, and the amount of the modified polyolefin may be from 0.02 to 3.3 parts by weight.

According to a thirteenth embodiment, in any one of the first to twelfth embodiments, the electrode current collector may not include a conductive primer layer on at least one surface.

According to a fourteenth embodiment, in any one of the first to thirteenth embodiments, the electrode layer may be derived from a dry electrode film.

According to a fifteenth embodiment, there is provided a method for manufacturing the electrode of any one of the first to fourteenth embodiments, the method including preparing a mixture including an active material, a conductive material and a binder, wherein the binder includes a fluorine-based polymer and a modified polyolefin, and the fluorine-based binder is polytetrafluoroethylene (PTFE); kneading the mixture in a range between 70°C and 200°C under a pressure that is equal to or higher than atmospheric pressure to prepare a mixture mass; grinding the mixture mass to obtain an electrode mixture powder; feeding the electrode mixture powder between a plurality of rolls and calendaring to form an electrode film; and laminating the electrode film onto a metal current collector.

According to a sixteenth embodiment, in the fifteenth embodiment, the kneading to prepare the mixture mass may be performed in a kneader under the pressure that is equal to or higher than atmospheric pressure.

According to a seventeenth embodiment, in the fifteenth or sixteenth embodiment, a compaction ratio of the electrode film may be 20% or less.

According to an eighteenth embodiment, there is provided a secondary battery including a positive electrode, a negative electrode, and a separator between the positive electrode and the negative electrode, wherein at least one of the positive electrode or the negative electrode is the electrode of any one of the first to fourteenth embodiments.

According to a nineteenth embodiment, there is provided an energy storage system comprising the secondary battery according to the eighteenth embodiment as a unit cell.

Advantageous Effects

According to an embodiment of the present disclosure, it may be possible to provide the dry electrode in which the dry electrode film includes the binder and further includes the modified polyolefin in the predetermined range of amounts, the modified polyolefin being a copolymer including the olefin derived repeat unit and the carboxylic acid or carboxylic acid anhydride derived repeat unit, to ensure the adhesion strength with the current collector having no primer coating, thereby simplifying the manufacturing process, keeping the adhesion strength with the current collector high after electrolyte solution dipping and suppressing the rise in interfacial resistance after electrolyte solution dipping.

BRIEF DESCRIPTION OF THE DRAWINGS

The accompanying drawings illustrate an exemplary embodiment of the present disclosure and together with the foregoing description, serve to provide a further understanding of the technical aspect of the present disclosure, and thus, the present disclosure is not construed as being limited to the drawings.

FIGs. 1a and 1b are diagrams of a process of making an electrode film for an electrode for use in an electrode assembly according to an embodiment of the present disclosure.
FIG. 2 is a diagram of an electrode lamination process according to an embodiment of the present disclosure.

DETAILED DESCRIPTION

Hereinafter, the present disclosure will be described in more detail to help an understanding of the present disclosure.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The terms used herein are used to describe exemplary embodiments, but not intended to be limiting of the present disclosure. As used herein, the singular forms include the plural forms as well, unless the context clearly indicates otherwise.

It should be further understood that "comprise" or "include" when used in the specification, specifies the presence of stated elements and does not preclude the presence or addition of one or more other elements unless expressly stated otherwise.

According to an aspect of the present disclosure, there is provided an electrode including:

an electrode current collector; and
an electrode layer disposed on the electrode current collector, and including an active material, a conductive material and a binder,
wherein the binder includes a fluorine-based polymer and a modified polyolefin,
wherein the fluorine-based binder is polytetrafluoroethylene (PTFE),
wherein the modified polyolefin includes a carboxylic acid anhydride derived functional group, and
wherein an amount of the modified polyolefin is from 2 to 40 parts by weight based on 100 parts by weight of the binder.

According to an embodiment of the present disclosure, the electrode may be a positive electrode or a negative electrode, and the active material may be a positive electrode active material or a negative electrode active material.

The positive electrode active material may include, for example, lithium transition metal oxide; lithium metal phosphate; lithium nickel-manganese-cobalt oxide; oxide with partial substitution of transition metal in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$), or compounds with one or more transition metal substitution; lithium manganese oxide such as Chemical Formula $Li_{1+x}Mn_{2-x}O_4$ (where x is from 0 to 0.33), $LiMnO_3$, $LiMn_2O_3$ or $LiMnO_2$; lithium copper oxide ($Li_2CuO_2$); vanadium oxide such as $LiV_3O_8$, $LiV_3O_4$, $V_2O_5$ or $Cu_2V_2O_7$; Ni site type lithium nickel oxide represented by Chemical Formula $LiNi_{1-x}M_xO_2$

(where M = Co, Mn, Al, Cu, Fe, Mg, B or Ga, x = 0.01 to 0.3); lithium manganese composite oxide represented by Chemical Formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium metal phosphate $LiMPO_4$ (where M = Fe, CO, Ni or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); oxide with partial substitution of aluminum in lithium nickel-manganese-cobalt oxide (lithium nickel-manganese-cobalt-aluminum oxide) $Li_a[Ni_bCo_cMn_dAl_e]_{1-f}M^1_fO_2$ ($M^1$ is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, $0 \leq f \leq 0.1$), disulfide compounds; $Fe_2(MoO_4)_3$, but is not limited thereto. Specifically, the lithium nickel-manganese-cobalt-aluminum oxide may be $Li[Ni_{0.88}Co_{0.07}Mn_{0.04}]Al_{0.01}O_2$).

Additionally, the negative electrode active material may include carbon such as nongraphitizing carbon or graphite-based carbon; metal composite oxide such as $Li_xFe_2O_3$ ($0 \leq x \leq 1$), $Li_xWO_2$ ($0 \leq x \leq 1$), or $Sn_xMe_{1-x}Me'_yO_z$ (Me: Mn, Fe, Pb, Ge; Me': Al, B, P, Si, Groups 1, 2 and 3 elements in the periodic table, halogen; $0 \leq x \leq 1$; $1 \leq y \leq 3$; $1 \leq z \leq 8$); lithium metals; lithium alloys; silicon-based alloys; tin-based alloys; silicon-based oxide such as SiO, SiO/C, or $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, or $Bi_2O_5$; conductive polymer such as polyacetylene; or Li-Co-Ni based materials.

According to an embodiment of the present disclosure, the electrode may be a positive electrode, and accordingly, the active material may be, specifically, a positive electrode active material, and more specifically, lithium transition metal oxide, lithium nickel-manganese-cobalt oxide, oxide with partial substitution of Al or other transition metal in lithium nickel-manganese-cobalt oxide, lithium iron phosphate.

The conductive material is not limited to a particular type and may include any material having conductive properties without causing any chemical change in the corresponding battery. The conductive material may include, for example, graphite such as natural graphite or artificial graphite; carbon-based materials such as carbon black, acetylene black, Ketjen black, channel black, furnace black, lamp black, thermal black, carbon fibers; metal powder or metal fibers of copper, nickel, aluminum, silver; spiky or branched conductive whiskers such as zinc oxide whiskers, calcium carbonate whiskers, titanium dioxide whiskers, silicon oxide whiskers, silicon carbide whiskers, aluminum borate whiskers, magnesium borate whiskers, potassium titanate whiskers, silicon nitride whiskers, silicon carbide whiskers, alumina whiskers; conductive metal oxide such as titanium oxide; or conductive polymer such as polyphenylene derivatives, used singly or in combination. Specifically, for homogeneous mixing of the conductive material and improved conductivity, the conductive material may include at least one selected from the group consisting of activated carbon, graphite, carbon black and carbon nanotubes, and more specifically, activated carbon.

The binder includes the fluorine-based polymer and the modified polyolefin, and the fluorine-based binder is polytetrafluoroethylene (PTFE).

According to an embodiment of the present disclosure, in addition to the fluorine-based polymer and the modified polyolefin, the binder may further include a non fluorine-based polymer. The non fluorine-based polymer may include polyolefin, polyethylene oxide (PEO).

The modified polyolefin includes the carboxylic acid anhydride derived functional group.

According to an embodiment of the present disclosure, the modified polyolefin including the carboxylic acid anhydride derived functional group may include a copolymer including the olefin derived repeat unit and the carboxylic acid anhydride derived repeat unit, a modified polyolefin including the carboxylic acid anhydride derived functional group as a side chain functional group rather than a repeat unit, a modified polyolefin which is a copolymer including the olefin derived repeat unit and the carboxylic acid anhydride derived repeat unit wherein the carboxylic acid anhydride derived functional group may be included as a side chain functional group, or two or more of them.

When the modified polyolefin including the carboxylic acid anhydride derived functional group is a copolymer including the olefin derived repeat unit and the carboxylic acid anhydride derived repeat unit, in this instance, the copolymer may be a block copolymer, a random copolymer, or an alternating copolymer in which the olefin derived repeat unit and the carboxylic acid or carboxylic acid anhydride derived repeat unit are connected to the side chain. Additionally, the modified polyolefin including the carboxylic acid anhydride derived functional group may be a graft copolymer including the carboxylic acid anhydride derived repeat unit on the side chain of the polyolefin.

Additionally, according to an embodiment of the present disclosure, when the modified polyolefin including the carboxylic acid anhydride derived functional group is a modified polyolefin including the carboxylic acid anhydride derived functional group as the side chain functional group rather than the repeat unit, the modified polyolefin may be a compound in which at least one hydrogen of the polyolefin is substituted by the carboxylic acid anhydride derived functional group.

The modified polyolefin may include at least one of modified polyethylene or modified polypropylene. The modified polyolefin may be modified polyethylene.

According to an embodiment of the present disclosure, the modified polyolefin may be a polymer including the olefin derived repeat unit, and in this instance, the olefin derived repeat unit may be derived from an olefin including at least one of ethylene or propylene.

According to an embodiment of the present disclosure, the modified polyolefin may further include an olefin elastomer derived repeat unit, a styrene derived repeat unit, an unsaturated hydrocarbon derived repeat unit, or two or more of them.

The olefin elastomer derived repeat unit may be a repeat unit derived from 1-butene, 1-octene.

The styrene derived repeat unit may be a repeat unit derived from styrene, substituted styrene. The unsaturated hydrocarbon derived repeat unit may be a repeat unit derived from 1,2-butadiene, 1,3-butadiene.

Specifically, the modified polyolefin may be a poly(ethylene)-(1-butene) copolymer, a poly(ethylene)-(1-octene) copolymer, a poly(ethylene)-(1-propylene) copolymer, a poly(ethylene)-(styrene)-(butadiene) copolymer, including the carboxylic acid anhydride derived functional group.

According to an embodiment of the present disclosure, when the modified polyolefin including the carboxylic acid anhydride derived functional group is a copolymer including the olefin derived repeat unit and the carboxylic acid anhydride derived repeat unit, the carboxylic acid anhydride derived functional group may be derived from carboxylic acid anhydride including maleic anhydride, glutaric anhydride, phthalic anhydride, trimellitic anhydride, pyromellitic monoanhydride, pyromellitic dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride or two or more of them.

The modified polyolefin may be at least one of polyethylene including the maleic anhydride derived functional group or polypropylene including the maleic anhydride derived functional group.

According to an embodiment of the present disclosure, the amount of the carboxylic acid anhydride derived functional group in the modified polyolefin may be from 0.5 to 20 mol%, or from 0.5 to 15 mol%. When the amount of the carboxylic acid anhydride derived repeat unit in the modified polyolefin satisfies the aforementioned range, it may be possible to ensure hydrophilicity of the modified polyolefin due to high reactivity of carboxylic acid anhydride, leading to a significant improvement in adhesive strength on the adhesion surface between the electrode layer including the modified polyolefin and the current collector (for example, the metal current collector).

In this instance, the amount (mol%) of the carboxylic acid anhydride derived functional group in the modified polyolefin may be defined in a percentage of the number of moles of the carboxylic acid anhydride derived functional group (including the repeat unit and the side chain functional group) to the total number of moles of all repeat units and functional groups included in the modified polyolefin (for example, including the olefin derived repeat unit, the carboxylic acid anhydride derived functional group (the carboxylic acid anhydride derived repeat unit, the carboxylic anhydride derived functional group (simply linked to the side chain, not the repeat unit of the copolymer)).

The electrode according to the present disclosure has the electrode layer including the active material, the conductive material and the fluorine-based polymer and further including the modified polyolefin as the binder having high adhesion characteristics with the current collector, thereby improving the adhesion strength between the non-coating current collector having no primer layer and the electrode layer without the need for a process of forming a primer layer on the current collector.

According to an embodiment of the present disclosure, the electrode layer may include the fibrillated binder to bind the active material and the conductive material, and the fibrillated binder is less likely to break than the conventional nonfibrillated binder and has high elongation in the length direction, thereby improving flexibility of the electrode layer and the electrode including the same. That is, when fibrillated, the binder may bind the active material and the conductive material. Specifically, as the fluorine-based polymer in the binder is fibrillated, the binder may play a role in binding the active material and the conductive material together with the modified polyolefin, thereby improving the adhesive strength with the current collector. The fibrillation process of the binder will be described in detail in an electrode manufacturing method as described below.

Additionally, the amount of the modified polyolefin is from 2 to 40 parts by weight based on 100 parts by weight of the binder.

According to an embodiment of the present disclosure, the amount of the modified polyolefin may be from 3 to 40 parts by weight, from 3.5 to 40 parts by weight, or from 4 to 40 parts by weight, or from 4.2 to 38.5 parts by weight, from 4.2 to 8.3 parts by weight, or from 4.2 to 16.7, or from 8.3 to 16.7 parts by weight, based on 100 parts by weight of the binder.

When the amount of the modified polyolefin is less than 2 parts by weight based on 100 parts by weight of the binder, it is not effective in improving the adhesion strength between the electrode layer and the current collector, and when the amount of the modified polyolefin is more than 40 parts by weight, a ratio of the fluorine-based polymer in the total amount of the binder is low, resulting in poor mechanical properties of the electrode film that forms the electrode layer, which makes it difficult to form a film.

According to an embodiment of the present disclosure, a Melt Index (MI) of the modified polyolefin may be 50g/10min or less, or from 0.5 to 50g/10min, or from 1 to 30g/10min, or from 1 to 10g/10min, or from 3 to 50g/10min, or from 3 to 30g/10min, or from 3 to 10g/10min, or from 0.5 to 3g/10min, or from 2 to 50g/10min, or from 2 to 30g/10min, or from 2 to 10g/10min, or from 0.5 to 2g/10min, or from 2 to 3 g/10min.

When the Melt Index (MI) of the modified polyolefin satisfies 50g/10min or less, it may be possible to ensure the optimum molecular weight of the modified polyolefin, thereby further improving the adhesion strength between the electrode layer and the current collector.

In this instance, the melt index may be referred to as a melt flow rate or a melt flow index, and is one of characteristics values indicating rheological properties of polymers. For example, the measured value of the melt index may be may be calculated as the weight of a polymer sample flowing in 10 minutes, and its unit may be g/10min.

According to an embodiment of the present disclosure, the melt index (MI) may be measured in accordance with ASTM D-1238 (condition E, 190°C, 2.16 Kg load), or 230°C, 2.16 Kg load condition. Specifically, among the above-described measurement conditions, the former condition (190°C, 2.16 Kg load) may be applied to measure the melt index of the modified polyethylene, and the latter condition (230°C, 2.16 Kg load) may be applied to measure the melt index of the modified polypropylene.

According to an embodiment of the present disclosure, the melting point of the modified polyolefin may be 175°C or less, or from 110°C to 175°C, or from 110°C to 128°C, or from 128°C to 175°C, or from 110°C to 122°C, or from 122°C to 175°C, or from 122°C to 128°C, or from 110°C to 165°C, or from 165°C to 175°C, or from 122°C to 165°C, or from 128°C to 165°C. When the melting point of the modified polyolefin satisfies 175°C or less, it may be possible to ensure more homogeneous mixing with the active material, the conductive material and the binder in a kneading step in the manufacture of the electrode film as described below.

In this instance, the melting point of the modified polyolefin may be measured using a Differential Scanning Calorimeter (DSC, machine name: DSC 2920, manufacturer: TA instrument). Specifically, after heating the polymer to 220°C, the temperature may be maintained for 5 minutes, and the polymer may be cooled down to 20°C, followed by increasing the temperature again, and in this instance, each of the temperature rise rate and the temperature drop rate may be adjusted to 10°C/min.

According to an embodiment of the present disclosure, the amount of the active material may be from 80 to 98 parts by weight, the amount of the conductive material may be from 0.5 to 10 parts by weight, the amount of the fluorine-based polymer may be from 0.5 to 5 parts by weight, and the amount of the modified polyolefin may be from 0.02 to 3.3 parts by weight.

Additionally, the amount of the active material may be from 90 to 98 parts by weight, or from 90 to 96 parts by weight, or from 90 to 96.6 parts by weight, the amount of the conductive material may be from 0.5 to 7 parts by weight, or from 0.5 to 1 part by weight, or from 1 to 7 parts by weight, the amount of the fluorine-based polymer may be from 0.5 to 4.5 parts by weight, or from 0.5 to 2 parts by weight, or from 2 to 4.5 parts by weight, or from 0.5 to 2.3 parts by weight, or from 2 to 2.3 parts by weight, or from 2.3 to 4.5 parts by weight, or from 0.5 to 2.2 parts by weight, or from 2 to 2.2 parts by weight, or from 2.2 to 4.5 parts by weight, or from 2.2 to 2.3 parts by weight, or from 0.5 to 1.6 parts by weight, or from 1.6 to 2.2 parts by weight, or from 1.6 to 4.5 parts by weight, or from 1.6 to 2.3 parts by weight, and the amount of the modified polyolefin may be from 0.02 to 3 parts by weight, or from 0.02 to 2.5 parts by weight, from 0.02 to 1 part by weight, or from 0.03 to 2 parts by weight, or from 0.1 to 3 parts by weight, or from 0.2 to 3 parts by weight, or from 0.4 to 3 parts by weight, or from 1 to 3 parts by weight.

When the amounts of the active material, the conductive material, the binder and the modified polyolefin satisfy the aforementioned ranges, the binder may be sufficiently fibrillated to form a mixture mass in the subsequent kneading process, the electrode film may be easily manufactured by shaping the mixture powder formed through a grinding process, the properties of the electrode film may be obtained, the sufficient amount of the active material may prevent the capacity fading, and sufficient conductivity may be obtained.

Meanwhile, in some instances, the electrode layer may further include fillers to suppress swelling of the electrode, and the fillers may include, without limitation, any type of fibrous material that does not cause any chemical change in the corresponding battery. The fillers may include, for example, olefin-based polymer such as polyethylene or polypropylene; and fibrous materials such as glass fibers or carbon fibers.

The current collector is not limited to a particular type and may include those having high conductivity without causing any chemical change in the battery, and may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam or a nonwoven.

As described above, the electrode layer of the electrode of the present disclosure includes the modified polyolefin which is a copolymer including the olefin derived repeat unit and the carboxylic acid or carboxylic acid anhydride derived repeat unit, and due to high reactivity of the carboxylic acid anhydride derived repeat unit of the modified polyolefin, the electrode layer including the modified polyolefin has significantly improved adhesion strength with the current collector. Accordingly, the current collector used in the electrode of an embodiment of the present disclosure may have high adhesion strength and interfacial resistance characteristics between the electrode layer and the current collector without needing to have a primer layer.

The porosity of the electrode layer of the electrode may be from 20 to 50%, or from 20 to 45%, or from 20 to 40%, or from 20 to 35%, or from 22 to 30%, or from 20 to 28%, or from 20 to 26%, or from 23.1 to 27.4%, or from 23.1 to 24.8%, from 23 to 26%, or from 24.8 to 27.4%. The porosity may change depending on the desired effect.

However, when the porosity of the electrode layer is within the aforementioned range, electrolyte solution wetting is improved, leading to the outstanding life characteristics and output characteristics, and there is no need to increase the volume to achieve the same capacity, which provides a beneficial effect on energy density by volume.

The porosity of the electrode layer may be calculated by the following relationship equation; measure the apparent density of the mixture film by subtracting the volume and weight of the current collector from the volume and weight of the electrode, calculate the true density based on the true density and composition of each component, and solve the equation by inserting the values.

$$\text{Porosity } (\%) = \{1 - (\text{apparent density/true density})\} \times 100$$

In an embodiment of the present disclosure, the degree of crystallinity of the binder in the electrode layer may be 10% or less.

In the present disclosure, the degree of crystallinity ($X_c$) may be measured through differential scanning calorimetry (DSC) on the basis of the temperature (peak temperature) at the time when the enthalpy of crystallization is at the maximum. Specifically, the degree of crystallinity is a % ratio obtained by dividing a melting enthalpy ($\triangle H_m$) value actually measured by DSC by a melting enthalpy ($\triangle H_m^0$, the equilibrium heat of fusion) value of a theoretically perfect crystal (degree of crystallinity 100%), and may be calculated by Relationship equation 1 below. Here, for the melting enthalpy value of a theoretically perfect crystal of known polymer, reference may be made to polymer handbook, and for unknown or newly synthesized materials, this value can be calculated using an extrapolation method by extending the crystallinity values from two or more points..

[Relationship equation 1]

$$X_c(\%) = (\triangle H_m \quad / \triangle H_m^0) \quad \times 100$$

The electrode layer may be derived from a dry electrode film. The dry electrode film is manufactured by a dry manufacturing method without using a dispersion medium, as opposed to a wet electrode manufacturing method including coating and drying a slurry on a current collector, the slurry obtained by dissolving and/or dispersing an active material, a conductive material and a binder in a dispersion medium such as water or an organic solvent as conventionally done. Subsequently, the resultant electrode film is laminated on the current collector to manufacture an electrode. A method for manufacturing the electrode film and the electrode will be described in detail below.

According to an aspect of the present disclosure, there is provided a method for manufacturing the electrode according to an embodiment of the present disclosure, including the steps of:

preparing a mixture including the active material, the conductive material, the binder and the modified polyolefin;
kneading the mixture in a range between 70°C and 200°C under a pressure that is equal to or higher than the atmospheric pressure to form a mixture mass;
grinding the mixture mass to obtain an electrode mixture powder;
feeding the electrode mixture powder between a plurality of rolls and calendaring to form an electrode film; and
laminating the electrode film on the metal current collector.

Hereinafter, the method for manufacturing the electrode according to an embodiment of the present disclosure will be described in more detail.

First, the mixture including the active material, the conductive material, the binder and the modified polyolefin is prepared.

In this instance, the mixing for preparing the mixture is performed for uniform distribution of the active material, the conductive material, the binder and the modified polyolefin, and because of powder mixing, any method that enables simple mixing may be used without limitation. However, because the electrode of the present disclosure is manufactured by a dry manufacturing method without using a dispersion medium, the mixing may be performed by a dry mixing process, and the materials may be, for example, fed into a blender.

Additionally, the mixing may be performed in a mixer at 5,000 rpm to 20,000 rpm for 30 seconds to 2 minutes, specifically at 10,000 rpm to 15,000 rpm for 30 seconds to 1 minute to ensure uniformity.

According to an embodiment of the present disclosure, a supermixer may be used in the mixing step of preparing the mixture, and specifically the mixing may be performed in the supermixer at 1,000 to 2,000 rpm for 2 to 10 minutes.

The binder may be microfibrillated by the step of preparing the mixture powder. The microfibrillation refers to a process of breaking down polymer, and for example, may be performed using a mechanical shear force. Specific examples of the binder are as described above.

Subsequently, the mixture mass is prepared by kneading the mixture in a range between 70°C and 200°C under the pressure that is equal to or higher than the atmospheric pressure.

In the known technology, to fibrillate the binder, high shear mixing such as a jet-mill has been used, and cracks in the active material and tear or cut in resultant fibers occur due to the mixing. To solve this problem, the present disclosure uses low shear kneading rather than high shear mixing.

The kneading is not limited to a particular method. In a specific embodiment of the present disclosure, the kneading may be, for example, performed through a kneader.

The kneading is a step in which the active material, the conductive material and the modified polyolefin are held together or connected to each other by the fibrillation of the binder, to form the 100% solids mixture mass. Additionally, in the kneading step, the temperature may rise above the melting point of the modified polyolefin to melt the modified polyolefin for improved dispersion of the materials to be kneaded.

Specifically, the kneading may be controlled to the speed of from 10 rpm to 100 rpm. For example, the kneading may be controlled to the speed of 20 rpm or more or 70 rpm or less within the aforementioned range. The kneading may be performed for 1 minute to 30 minutes.

For example, the kneading may be performed at the speed of from 20 rpm to 50 rpm for 3 minutes to 30 minutes within the aforementioned range. Meanwhile, the kneading may be controlled to the shear rate in a range between 10/s and 500/s. In a specific embodiment of the present disclosure, the kneading may be performed for 1 minute to 30 minutes, and the shear rate may be controlled in a range between 30/s and 100/s.

Additionally, the kneading step may be performed at high temperature in the pressure condition that is equal to or higher than the atmospheric pressure, and more specifically, in the pressure condition that is higher than the atmospheric pressure.

More specifically, the kneading of the mixture may be performed in a range between 70°C and 200°C, and specifically, between 90°C and 180°C.

When the kneading is performed at low temperature outside of the aforementioned range, it is not good enough to fibrillate the binder during the kneading and form a mass by the kneading, which makes it difficult to form a film during calendaring, and when the kneading is performed at too high temperature, the fibrillization of the binder takes place quickly, and subsequently, the already formed fibers may be cut by too high shear force.

Additionally, the kneading may be performed under the pressure that is equal to or higher than the atmospheric pressure, or the pressure of from 1 atm (atmospheric pressure) to 60 atm, or the pressure of from 1 atm to 30 atm, or the pressure of from 1 atm to 10 atm, or the pressure of from 1 atm to 8 atm, or the pressure of from 1.1 atm to 7 atm, or the pressure of from 1.1 atm to 6 atm.

When the aforementioned pressure range is satisfied, it may be possible to prevent the problem that the resultant fibers are cut by too high shear force and pressure and the density of the mixture mass increases too much. That is, according to the present disclosure, when instead of high shear mixing, low shear mixing is performed at high temperature in the pressure condition that is equal to or higher than the atmospheric pressure, the intended effect of the present disclosure may be achieved.

Additionally, according to an embodiment of the present disclosure, to improve the dispersion of the modified polyolefin, after pre-mixing some of the active material or some of the conductive material with the modified polyolefin and kneading the mixture, the premixed and kneaded result may be mixed with the remaining electrode materials, and the mixture may be kneaded.

Subsequently, the electrode mixture powder is obtained by grinding the mixture mass.

Specifically, the mixture mass prepared through the kneading may immediately undergo calendering, but in this case, the mixture mass may be pressed into a thin film, thereby failing to obtain a uniform film, and according to the present disclosure, the prepared mixture mass goes through the grinding step. That is, when the electrode mixture powder obtained by the grinding is too large or agglomerates, bridges are formed in the calendering process, resulting in a film having defects such as pinholes or a film having nonuniform surface characteristics. Thus, grinding is first performed to obtain the electrode mixture powder having uniform size, then calendaring is performed.

In this instance, the grinding step may be performed with a blender or a grinder, but is not limited thereto, and specifically, the grinding step may be performed at the speed of from 5,000 rpm to 20,000 rpm for 30 seconds to 10 minutes, and specifically the speed of from 10,000 rpm to 18,000 rpm for 30 seconds to 2 minutes.

When the grinding speed and time are satisfied, it may be possible to grind enough to form powder of a suitable size to form a film and prevent cracks in the mixture mass. If necessary, a sieving process may be performed to filter out powder that is larger or smaller than a predetermined size.

According to an embodiment of the present disclosure, a cutter mill, a fine mill may be used in the grinding step. In this instance, the cutter mill may be used in 400 to 500 rpm condition for a few seconds to coarsely grind the mixture mass prepared by the kneading at a few mm level. Additionally, the fine mill may be used to uniformly grind coarse powder into a size of a uniform level or less, and may be used in 3,000 to 8,000 rpm condition.

Subsequently, the electrode mixture powder is fed into the plurality of rolls and calendared to form the electrode film.

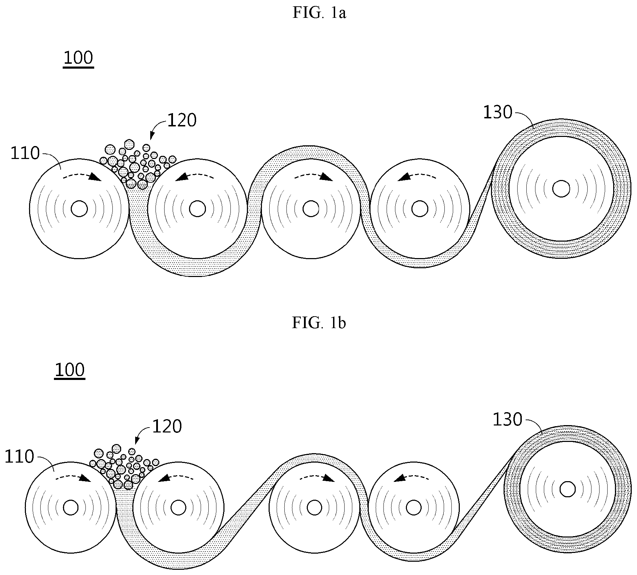

Referring to FIGs. 1a and 1b, the process 100 of forming the electrode film may include feeding the electrode mixture powder 120 obtained in the previous step between the adjacent rolls 100 among the plurality of rolls 110 arranged spaced apart from each other, rotating the rolls 110 in opposite directions to press the mixture powder 120 into a sheet or film through a powder sheeting step, and calendaring multiple times to obtain the electrode film having a target thickness.

According to an embodiment of the present disclosure, in the process of forming the electrode film, the gap between the plurality of rolls may be properly controlled, taking into account the dimension or properties of the electrode film. For example, compared with FIG. 1a, in FIG. 1b, the gap between the second and third rolls and the gap between the fourth and fifth rolls may be controlled to be larger.

Specifically, the calendaring may be a step of shaping the electrode mixture powder into a film, for example, a film having the average thickness of from 50 $\mu$m to 300 $\mu$m.

In this instance, the calendaring may be, for example, performed by opposing rolls. According to an embodiment of the present disclosure, the calendaring may be repeatedly performed one or more times, and for example, repeatedly performed from 1 to 5 times, or from 3 to 4 times, or 4 times.

In this instance, the roll temperature may be from 50°C to 200°C.

The rotation speed ratio of the rolls may be properly controlled according to the size of the rolls, the number of times the calendaring is performed and the thickness of the electrode film, and for example, may be controlled in a range between 1 and 10 times, or 1 and 8 times, or 1 and 7 times, or 1.2 and 5 times.

Additionally, the gap between the opposing rolls may be variously adjusted depending on the target thickness and density of the film.

When the calendaring step is completed, the dry electrode film that acts as the electrode material mixture may be formed. The dry electrode film is also known as a free standing film.

Because it does not include a solvent, the electrode film formed as described above has no or little flowability and thus is easy to handle and may be formed into a desired shape for use in the manufacture of various types of electrodes. In addition, when the electrode film of the present disclosure is used to manufacture the electrode, it may be possible to eliminate the drying process for solvent removal, thereby significantly improving the efficiency of the electrode manufacturing process, and solving the problem raised in the manufacture of the dry electrode, such as cracking of the active material or breakage of the fibrillized binder.

Meanwhile, in the present disclosure, the electrode film may have the porosity of from 20% to 50%, and the porosity may be preferably controlled to values of 40% or less or 30% or less within the aforementioned range. When the porosity satisfies the aforementioned range, electrolyte solution dipping is made easier, thereby improving the life characteristics and the output characteristics, and it does not need to increase the volume to achieve the same capacity, so the energy density by volume may improve. In an embodiment of the present disclosure, the porosity may be calculated by the following equation; measure the apparent density of the dry electrode film, calculate the true density based on the true density and composition of each substituent component, and solve the equation by inserting the values.

$$\text{Porosity (\%)} = \{1 - (\text{apparent density/true density})\} \times 100$$

Subsequently, the electrode film is laminated on the metal current collector.

The lamination step may be a step of rolling and attaching the electrode film obtained in the previous step on the current collector to a predetermined thickness. The lamination may be also performed by lamination rolls, and in this instance, the lamination rolls may be maintained at the temperature of from 25 to 250°C.

As described above, the electrode layer of the electrode of the present disclosure includes the modified polyolefin which is a copolymer including the olefin derived repeat unit and the carboxylic acid or carboxylic acid anhydride derived repeat unit, and due to high reactivity of the carboxylic acid anhydride derived repeat unit of the modified polyolefin, the electrode layer including the modified polyolefin may have significantly improved adhesion strength with the current collector. Accordingly, the current collector used in the electrode of an embodiment of the present disclosure may be used without needing to have a primer layer.

According to an embodiment of the present disclosure, a compression ratio of the electrode film may be from 30 to 50%, or from 35 to 50%, or from 40 to 50%.

The compression ratio of the electrode film may be defined as a ratio of compressed thickness of the electrode film at the moment of lamination, and may be represented by the following Equation 1.

[Equation 1]

$$\text{Compression ratio (\%)} = T_p/T_1 \times 100$$

In the above Equation 1,

$T_p$ denotes the compressed thickness of the electrode film in the lamination step, and
$T_1$ denotes the thickness of the electrode film before the lamination step.

In the present disclosure, when the compression ratio is adjusted to the specific range in the lamination step, it may be possible to provide the optimal density and porosity of the electrode film and high adhesion strength between the electrode film and the current collector.

When the compression ratio of the electrode film satisfies the range between 30 and 50%, due to the sufficient pressure applied to the electrode film, it may be possible to enhance the adhesion strength between the electrode film and the current collector, prevent the peel-off of the electrode film from the current collector after the lamination process, and avoid lower porosity than the target porosity due to the increased density of the electrode film more than necessary or damage to the current collector.

In an embodiment of the present disclosure, in the lamination of the electrode film onto two surfaces of the current collector, the compression ratio (%) of the above Equation 1 may be rewritten as the following Equation 2.

[Equation 2]

$$30 \leq (T_1 + 0.5T_c - 0.5T_{gap})/T_1 \times 100 \leq 50$$

In the above Equation 2, $T_1$ denotes the thickness of the electrode film before the lamination step, $T_c$ denotes the thickness of the current collector, and $T_{gap}$ denotes the gap between first and second press rolls.

Additionally, the roll pressing ratio of the electrode film subjected to lamination may be in a range of 20% or less, 18% or less, 15% or less, from 5% to 15%, from 6% to 15%, from 7% to 15%, or from 9% to 13%.

Here, the roll pressing ratio may be defined as a ratio of the thickness of the electrode film after the lamination step to the thickness of the electrode film before the lamination step, and may be represented by the following Equation 3.

[Equation 3]

$$\text{Roll pressing ratio (\%)} = (T_1 - T_2)/T_1 \times 100$$

In the above Equation 3,

$T_1$ denotes the thickness of the electrode film before the lamination step, and
$T_2$ denotes the thickness of the electrode film after the lamination step.

When the roll pressing ratio satisfies the aforementioned range, the electrode film may exhibit the optimal density and porosity and have the improved adhesion strength with the current collector.

An increase in apparent density before and after the lamination of the electrode film and the current collector may be represented by the following Equation 4:

[Equation 4]

$$\text{Increase in apparent density (\%)} = (D_2 - D_1)/D_1 \times 100$$

$D_1$ denotes the apparent density (g/cm$^3$) of the electrode film before the lamination step, and
$D_2$ denotes the apparent density (g/cm$^3$) of the electrode film after the lamination step.

The increase in apparent density of the electrode film before and after the lamination with the current collector may be 5 to 30%, 7 to 25%, or 10 to 20%.

$D_1$ and $D_2$ indicating the apparent density of the electrode film may variously change depending on the type of the active material, and according to an embodiment of the present disclosure, when the active material is lithium nickel-manganese-cobalt oxide Li$_{1+x}$(Ni$_a$Co$_b$Mn$_c$)$_{1-x}$O$_2$(x = 0 to 0.03, a = 0.3 to 0.95, b = 0.01 to 0.35, c = 0.01 to 0.5, a+b+c=1); or oxide with partial substitution of aluminum in lithium nickel-manganese-cobalt oxide (lithium nickel-manganese-cobalt-aluminum oxide) Li$_a$[Ni$_b$Co$_c$Mn$_d$Al$_e$]$_{1-f}$M$^1$$_f$O$_2$(M$^1$ is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1), $D_1$ and $D_2$ may range from

2.75 g/cm$^3$ to 3.75 g/cm$^3$.

Meanwhile, when the increase in apparent density of the electrode film satisfies the aforementioned range, it may be possible to improve the adhesion strength between the electrode film and the current collector, and prevent the porosity outside of the target range or damage to the positive electrode active material or the current collector.

The apparent density of the electrode film before and after the lamination with the current collector may be calculated by measuring the weight and thickness of the electrode film before the lamination, measuring the weight and thickness of the electrode after the lamination and subtracting the weight and thickness of the current collector to find the weight and thickness of the electrode film.

Additionally, the active material loading amount of the dry electrode film may be from 3 mAh/cm$^2$ to 15 mAh/cm$^2$, and specifically from 4 mAh/cm$^2$ to 10 mAh/cm$^2$.

Here, the active material loading amount is a value calculated by the following Equation 5.

Active material loading amount (mAh/cm$^2$) = (Capacity (mAh/g) of active material) x (Weight percent (wt%) of active material in dry electrode film) x (Weight per unit area of dry electrode film (g/cm$^2$))     [Equation 5]

Additionally, the interfacial resistance between the electrode film and the current collector (resistance before electrolyte solution dipping, initial resistance) may be 1 $\Omega \cdot$cm$^2$ or less, or 0.8 $\Omega \cdot$cm$^2$ or less, or 0.7 $\Omega \cdot$cm$^2$ or less, or 0.5 $\Omega \cdot$cm$^2$ or less, or 0.29 $\Omega \cdot$cm$^2$ or less, or from 0.20 to 1 $\Omega \cdot$cm$^2$, or from 0.20 to 0.29 $\Omega \cdot$cm$^2$.

Here, the interfacial resistance may be calculated using a multiprobe (MP) resistance measurement method; apply an electric current of 100 $\mu$A to the electrode, measure a potential difference between the multiple probes, and measure a resistance value across the interface between the dry electrode film and the current collector as the potential difference. When the interfacial resistance satisfies the aforementioned range, it may be possible to improve the battery performance of a secondary battery that will be fabricated.

Additionally, according to an embodiment of the present disclosure, the interfacial resistance between the electrode film and the current collector after dipping the electrode with the electrolyte solution may be 1.0 $\Omega \cdot$cm$^2$ or less, or 0.8 $\Omega \cdot$cm$^2$ or less, or 0.7 $\Omega \cdot$cm$^2$ or less, or from 0.3 to 1.0 $\Omega \cdot$cm$^2$, or from 0.32 to 1.0 $\Omega \cdot$cm$^2$, or from 0.32 to 0.69 $\Omega \cdot$cm$^2$.

In this instance, the interfacial resistance between the electrode film and the current collector after electrolyte solution dipping may be calculated as below: prepare an electrolyte solution in which 1M of LiPF$_6$ is dissolved in a solvent containing a mixture of ethylene carbonate, dimethyl carbonate and diethyl carbonate at a volume ratio of 1:2:1, immerse the electrode for a week and take out the electrode, then apply a Multi Probe (MP) resistance measurement method including applying an electric current of 100 $\mu$A, measuring a potential difference between the plurality of probes and measuring a resistance value across the interface between the dry electrode film and the current collector as the potential difference.

According to an embodiment of the present disclosure, the adhesion strength (initial adhesion strength, adhesion strength before electrolyte solution dipping) of the electrode may be 38 gf/2cm or more, or 50 gf/2cm or more, or from 50 gf/2cm to 500 gf/2cm, or from 150 gf/2cm to 250 gf/2cm, or from 162 gf/2cm to 212 gf/2cm.

In this instance, the adhesion strength of the electrode may be measured by attaching a double sided tape to a slide glass, placing an electrode sample thereon, the electrode sample obtained by punching the electrode into a predetermined size (for example, 20 mm X 100 mm), moving a 2kg roller back and forth 10 times to adhere, debubbling using a laminator at a gap of 5 mm and the speed of 5 mpm, and pulling at 100 mm/min using UTM (available from TA) to peel from the slide glass, and the adhesion strength of the electrode is a measure of the peeling force. In this instance, a measured angle between the slide glass and the electrode may be 90°.

According to an embodiment of the present disclosure, the adhesion strength of the electrode after electrolyte solution dipping may be 38 gf/2cm or more, or 50 gf/2cm or more, or 150 gf/2cm or more, or from 50 gf/2cm to 500 gf/2cm, or from 150 gf/2cm to 300 gf/2cm, or from 170 gf/2cm to 250 gf/2cm, or from 174 gf/2cm to 233 gf/2cm.

In this instance, the adhesion strength of the electrode after electrolyte solution dipping may be measured by preparing an electrolyte solution in which 1M of LiPF6 is dissolved in a solvent containing a mixture of ethylene carbonate, dimethyl carbonate and diethyl carbonate at a volume ratio of 1:2:1, immersing the electrode for a week, taking out the electrode, washing with a DMC solution, drying the electrode, punching into a predetermined size (for example 20 mm X 100 mm) to obtain a positive electrode sample, placing the sample, moving a 2 kg roller back and forth 10 times to adhere, debubbling using a laminator at a gap 5 mm and the speed of 5 mpm, and pulling at 100 mm/min using UTM (available from TA) to peel from the slide glass, and the adhesion strength is a measure of the peeling force. In this instance, a measured angle between the slide glass and the electrode may be 90°.

When the adhesion strength of the electrode after electrolyte solution dipping satisfies the aforementioned range, after the electrode is dipped with the electrolyte solution, swells do not occur in the electrode layer, avoiding separation of the electrode layer or bubbles in the electrode layer, and thus the adhesion strength may be maintained even after electrolyte solution dipping.

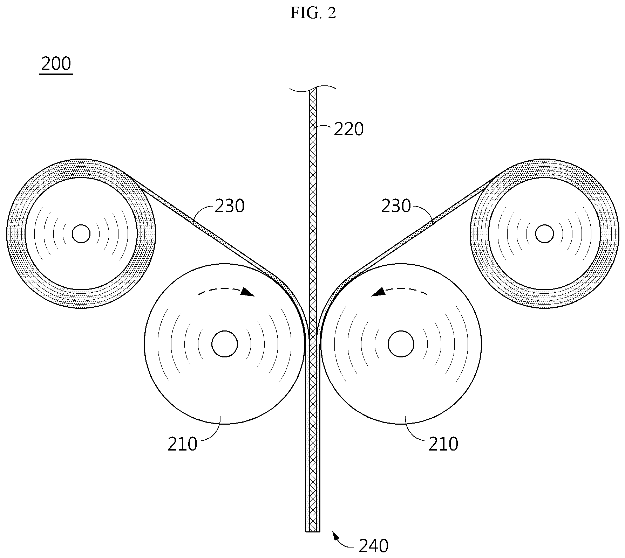

FIG. 2 is a diagram of the step of laminating the electrode film onto two surfaces of the current collector according to an embodiment of the present disclosure. That is, in the lamination step 200, the electrode film 230 obtained in the previous step is rolled and attached to the current collector 220 to the predetermined thickness using the pair of lamination rolls 210, to finally obtain the electrode 240.

According to another embodiment of the present disclosure, there is provided an electrode manufactured by the method for manufacturing the electrode. Additionally, there are provided a secondary battery including the electrode, wherein the electrode is a positive electrode, and a battery case (a cylindrical case, a prismatic case, a pouch, etc.) accommodates an electrode assembly including the positive electrode, a negative electrode and a separator together with a lithium containing nonaqueous electrolyte, and an energy storage system including the secondary battery as a unit cell.

In this instance, the detailed structure of the secondary battery and the energy storage system is well known in the art, and its description is omitted.

Meanwhile, according to an embodiment of the present disclosure, there is provided an apparatus for manufacturing a dry electrode including a blender to mix the mixture raw materials including the active material, the conductive material, the binder and the modified polyolefin; a kneader to knead the mixture to prepare the mixture mass; a grinder to grind the mixture mass to form the electrode mixture powder; a calender to form the electrode mixture powder into the dry electrode film; and lamination rolls to laminate the dry electrode film on at least one surface of the current collector.

The blender is a mixer that mixes the raw materials, and may mix the mixture raw materials at the speed of from 5000 rpm to 20000 rpm as described above. The mixer may include a supermixer.

The kneader is used to fibrillate the binder and disperse the mixture raw materials in the present disclosure, and the mixture may turn into the mixture mass through the kneading in the kneader. In this instance, the kneader for obtaining the result according to the present disclosure may work in a temperature range between 70°C and 200°C, or between 90°C and 180°C under the pressure that is equal to or higher than the atmospheric pressure, or the pressure of from 1 atm (atmospheric pressure) to 60 atm, or the pressure of from 1 atm to 30 atm, or the pressure of from 1 atm to 10 atm, or the pressure of from 1 atm to 8 atm, or the pressure of from 1.1 atm to 7 atm, or the pressure of from 1.1 atm to 6 atm.

The grinder is a device that grinds the mixture mass to form the electrode mixture powder, and a blender or a grinder may be used, and the grinder includes a cutter mill and a fine mill.

The calender is a device that shapes the electrode mixture powder into a film, and may be, for example, a pair of opposing roller, and the thickness of the film may be adjusted from the gap between the rollers.

The lamination rolls play a role in attaching and rolling the dry electrode film formed by the calender to at least one surface of the current collector.

The porosity of the dry electrode film according to the present disclosure may be determined by the calender and the lamination rolls.

That is, the apparatus for manufacturing the dry electrode according to the present disclosure is characterized by including the kneader and the grinder.

The detailed structure of the blender, the kneader, the calender and the lamination rolls is well known in the art, and its description is omitted.

Hereinafter, embodiments will be described in detail to describe the present disclosure in detail. However, the embodiments according to the present disclosure may be modified in many different forms, and the scope of the present disclosure should not be interpreted as being limited to the following embodiments. The embodiments of the present disclosure are provided to describe the present disclosure to those skilled in the art thoroughly and completely.

Example 1

96.6g of lithium nickel cobalt manganese aluminum oxide (NCMA, $Li[Ni_{0.88}Co_{0.07}Mn_{0.04}]Al_{0.01}O_2$) as a positive electrode active material, 1g of carbon black as a conductive material, 2g of polytetrafluoroethylene (PTFE) as a binder and 0.4g of a polyethylene-based copolymer including a maleic anhydride derived functional group as a modified polyolefin (Woosung Chemical, SP1750) (Tm 128°C, Melt Index 3g/10min (measured in 190°C, 2.16kg conditions)) were fed into a blender and mixed at 10,000 rpm for 1 minute to prepare a mixture, and the resultant product was fed into a kneader.

The temperature of the kneader was stabilized at 150°C, the mixture was placed in the pressurized kneader and the pressurized kneader was operated at the speed of 40 rpm for 5 minutes under about 1.1 atmospheric pressure (atm) to obtain a mixture mass. The mixture mass was fed into the blender, and ground at 10,000 rpm for 30 seconds and sieved through a sieve having an opening size of 1 mm to obtain an electrode mixture powder. Subsequently, the electrode mixture powder was fed into a lab calender (roll diameter: 160 mm, roll temperature: 100°C) to form a film, and calendaring was repeated two times to form an electrode film. Each of two sheets of electrode films was placed on each of two surfaces of an aluminum foil (thickness 19 $\mu$m) that was not coated with a primer layer and lamination was performed through press rolls maintained at 150°C to manufacture an electrode (a positive electrode).

The total thickness of the finally manufactured electrode was 169 $\mu$m, and the thickness of the active material layer formed on one surface of the active material layer present on two surfaces of the current collector was 75 $\mu$m.

Example 2

An electrode film and an electrode (a positive electrode) were manufactured by the same method as Example 1 except that 96.6g of lithium nickel cobalt manganese aluminum oxide (NCMA, Li[Ni$_{0.88}$Co$_{0.07}$Mn$_{0.04}$]Al$_{0.01}$O$_2$) as the positive electrode active material, 1g of carbon black as the conductive material, 2.3g of polytetrafluoroethylene (PTFE) as the binder and 0.1g of a polyethylene-based copolymer including a maleic anhydride derived functional group as the modified polyolefin (Woosung Chemical, SP1300) (Tm 122°C, Melt Index 2g/10 min (measured in 190°C, 2.16kg conditions)) were fed into the blender and mixed at 10,000 rpm for 1 minute to prepare a mixture, and the resultant product was fed into the kneader.
The total thickness of the finally manufactured electrode was 171 $\mu$m, and the thickness of the active material layer formed on one surface of the active material layer present on two surfaces of the current collector was 76 $\mu$m.

Example 3

An electrode film and an electrode (a positive electrode) were manufactured by the same method as Example 1 except that 96.6g of lithium nickel cobalt manganese aluminum oxide (NCMA, Li[Ni$_{0.88}$Co$_{0.07}$Mn$_{0.04}$]Al$_{0.01}$O$_2$) as the positive electrode active material, 1g of carbon black as the conductive material, 2.2g of polytetrafluoroethylene (PTFE) as the binder and 0.2g of a polypropylene-based copolymer including a maleic anhydride derived functional group as the modified polyolefin (Woosung Chemical, SP3789) (Tm 165°C, Melt Index (3g/10min (measured in 230°C, 2.16kg conditions)) were fed into the blender and mixed at 10,000 rpm for 1 minute to prepare a mixture, the resultant product was fed into the 170°C kneader and the rolling roll was maintained at 170°C.
The total thickness of the finally manufactured electrode was 173 $\mu$m, and the thickness of the active material layer formed on one surface of the active material layer present on two surfaces of the current collector was 77 $\mu$m.

Example 4

An electrode film and an electrode (a positive electrode) were manufactured by the same method as Example 1 except that 96.0g of lithium nickel cobalt manganese aluminum oxide (NCMA, Li[Ni$_{0.88}$Co$_{0.07}$Mn$_{0.04}$]Al$_{0.01}$O$_2$) as the positive electrode active material, 1g of carbon black as the conductive material, 1.6g of polytetrafluoroethylene (PTFE) as the binder and 1.0g of a polyethylene-based copolymer including a maleic anhydride derived functional group as the modified polyolefin (Woosung Chemical, SP1300) (Tm 122°C, Melt Index 2g/10min (measured in 190°C, 2.16kg conditions) were fed into the blender and mixed at 10,000 rpm for 1 minute to prepare a mixture, and the resultant product was fed into the kneader.
The total thickness of the finally manufactured electrode was 179 $\mu$m, and the thickness of the active material layer formed on one surface of the active material layer present on two surfaces of the current collector was 80 $\mu$m.

Comparative Example 1

An electrode film and an electrode (a positive electrode) were manufactured by the same method as Example 1 except that 96.6g of lithium nickel cobalt manganese aluminum oxide (NCMA, Li[Ni$_{0.88}$Co$_{0.07}$Mn$_{0.04}$]Al$_{0.01}$O$_2$) as the positive electrode active material, 1g of carbon black as the conductive material and 2.4g of polytetrafluoroethylene (PTFE) as the binder were fed into the blender and mixed at 10,000 rpm for 1 minute to prepare a mixture, and the resultant product was fed into the kneader.
The total thickness of the finally manufactured electrode was 171 $\mu$m, and the thickness of the active material layer formed on one surface of the active material layer present on two surfaces of the current collector was 76 $\mu$m.

Comparative Example 2

An electrode film and an electrode (a positive electrode) were manufactured by the same method as Example 1 except that 96.6g of lithium nickel cobalt manganese aluminum oxide (NCMA, Li[Ni$_{0.88}$Co$_{0.07}$Mn$_{0.04}$]Al$_{0.01}$O$_2$) as the positive electrode active material, 1g of carbon black as the conductive material, 2g of polytetrafluoroethylene (PTFE) as the binder and 0.4g of polyethylene were fed into the blender and mixed at 10,000 rpm for 1 minute to prepare a mixture, and the resultant product was fed into the kneader.
The total thickness of the finally manufactured electrode was 169 $\mu$m, and the thickness of the active material layer formed on one surface of the active material layer present on two surfaces of the current collector was 75 $\mu$m.

Comparative Example 3

An electrode film and an electrode (a positive electrode) were manufactured by the same method as Example 1 except that 96.6g of lithium nickel cobalt manganese aluminum oxide (NCMA, $Li[Ni_{0.88}Co_{0.07}Mn_{0.04}]Al_{0.01}O_2$) as the positive electrode active material, 1g of carbon black as the conductive material, 2.36g of polytetrafluoroethylene (PTFE) as the binder and 0.04g of a polyethylene-based copolymer including a maleic anhydride derived functional group as the modified polyolefin (Woosung Chemical, SP1300) (Tm 122°C, Melt Index 2g/10min (measured in 190°C, 2.16kg conditions)) were fed into the blender and mixed at 10,000 rpm for 1 minute to prepare a mixture.

The total thickness of the finally manufactured electrode was 173 $\mu$m, and the thickness of the active material layer formed on one surface of the active material layer present on two surfaces of the current collector was 77 $\mu$m.

Comparative Example 4

An attempt was made to manufacture an electrode film by the same method as Example 1 except that 96.0g of lithium nickel cobalt manganese aluminum oxide (NCMA, $Li[Ni_{0.88}Co_{0.07}Mn_{0.04}]Al_{0.01}O_2$) as the positive electrode active material, 1g of carbon black as the conductive material, 1.5g of polytetrafluoroethylene (PTFE) as the binder and 1.5g of a polyethylene-based copolymer including a maleic anhydride derived functional group as the modified polyolefin (Woosung Chemical, SP1300) (Tm 122°C, Melt Index 2g/10min (measured in 190°C, 2.16kg conditions)) were fed into the blender and mixed at 10,000 rpm for 1 minute to prepare a mixture, and the resultant product was fed into the kneader, but the electrode film easily broke, failing to obtain the whole complete film.

Comparative Example 5

96.0g of lithium nickel cobalt manganese aluminum oxide (NCMA, $Li[Ni_{0.88}Co_{0.07}Mn_{0.04}]Al_{0.01}O_2$) as a positive electrode active material, 1g of carbon black as a conductive material, 1.0g of polytetrafluoroethylene (PTFE) as a binder and 2.0g of a polyethylene-based copolymer including a maleic anhydride derived functional group as a modified polyolefin (Woosung Chemical, SP1300) (Tm 122°C, Melt Index 2g/10min (measured in 190°C, 2.16kg conditions)) were fed into a blender and mixed at 10,000 rpm for 1 minute to prepare a mixture, the temperature of a kneader was stabilized at 150°C, the mixture was put into the pressurized kneader, and the kneader was operated at the speed of 40 rpm for 5 minutes under about 1.1 atmospheric pressure (atm) to obtain a mixture mass. The mixture mass was fed into the blender, ground at 10,000 rpm for 30 seconds and sieved through a sieve having an opening size of 1 mm to obtain an electrode mixture powder. Subsequently, the electrode mixture powder was fed into a lab calender (roll diameter: 160 mm, roll temperature: 100°C) with an attempt to form a film, but the film broke, failing to obtain the whole complete film.

Comparative Example 6

96.6g of lithium nickel cobalt manganese aluminum oxide (NCMA, $Li[Ni_{0.88}Co_{0.07}Mn_{0.04}]Al_{0.01}O_2$) as a positive electrode active material, 1g of carbon black as a conductive material, 2g of PVDF as a binder and 0.4g of a polyethylene-based copolymer including a maleic anhydride derived functional group as a modified polyolefin (Woosung Chemical, SP1300) (Tm 122°C, Melt Index 2g/10min (measured in 190°C, 2.16kg conditions)) were fed into a blender and mixed at 10,000 rpm for 1 minute to prepare a mixture, the temperature of the kneader was stabilized at 150°C, the mixture was put into a pressurized kneader and the kneader was operated at the speed of 40 rpm for 5 minutes under about 1.1 atmospheric pressure (atm) to obtain a mixture mass. The mixture mass was fed into the blender, ground at 10,000 rpm for 30 seconds and sieved through a sieve having an opening size of 1 mm to obtain an electrode mixture powder. Subsequently, the electrode mixture powder was fed into a lab calender (roll diameter: 160 mm, roll temperature: 100°C) with an attempt to form a film, but the film broke, failing to obtain the whole complete film.

Performance evaluation

The following evaluation was performed on the electrodes (the positive electrodes) of Examples 1 to 4 and Comparative Example 1 to Comparative Example 3, and the results are shown in TABLE 1. In the case of comparative Examples 4 to 6, it was impossible to manufacture the electrode film as described above.

Evaluation of adhesion strength (initial adhesion strength, adhesion strength before electrolyte solution dipping)

The adhesion strength was measured by attaching a double sided tape to a slide glass, placing an electrode sample thereon, the electrode sample obtained by punching the electrodes of Examples 1 to 4, and Comparative Example 1 to Comparative Example 3 into a size of 20 mm X 100 mm, moving a 2kg roller back and forth 10 times to adhere, debubbling using a laminator at a gap of 5 mm and the speed of 5 mpm, and pulling at 100 mm/min using UTM (available from TA) to peel from the slide glass, and the adhesion strength is a measure of the peeling force. In this instance, a measured angle between the slide glass and the electrode was 90°.

Adhesion strength after electrolyte solution dipping

The adhesion strength after electrolyte solution dipping was measured by preparing an electrolyte solution in which 1M of $LiPF_6$ is dissolved in a solvent containing a mixture of ethylene carbonate, dimethyl carbonate and diethyl carbonate at a volume ratio of 1:2:1), immersing each electrode of Examples 1 to 4 and Comparative Example 1 to Comparative Example 3 for a week, taking out the electrode dipped with the electrolyte solution, washing with a DMC solution and drying, then punching into a size of 20 mm X 100 mm to obtain an electrode sample, placing the electrode sample, moving a 2 kg roller back and forth 10 times to adhere, debubbling using a laminator at a gap of 5mm and the speed of 5 mpm, and pulling at 100 mm/min using UTM (available from TA) to peel from the slide glass, and the adhesion strength is a measure of the peeling force. In this instance, a measured angle between the slide glass and the electrode was 90°.

Interfacial resistance (initial interfacial resistance, resistance before electrolyte solution dipping)

The interfacial resistance was calculated by measuring a resistance value across the interface between the dry electrode film and the current collector as a potential difference measured between a plurality of probes after applying an electric current of 100 $\mu$A to the electrodes of Examples 1 to 4 and Comparative Example 1 to Comparative Example 3 using a Multi Probe (MP) resistance measurement method.

Interfacial resistance after electrolyte solution dipping

An electrolyte solution was prepared in which 1M of $LiPF_6$ is dissolved in a solvent containing a mixture of ethylene carbonate, dimethyl carbonate and diethyl carbonate at a volume ratio of 1:2:1, and each electrode of Examples 1 to 4 and Comparative Example 1 to Comparative Example 3 were immersed in the electrolyte solution for a week. After taking out the electrode dipped with the electrolyte solution, the interfacial resistance was calculated by measuring a resistance value across the interface between the dry electrode film and the current collector as a potential difference measured between a plurality of probes after applying an electric current of 100 $\mu$A to the electrodes using a (Multi Probe (MP) resistance measurement method.

[TABLE 1]

| | Adhesion strength (gf/2cm) | Adhesion strength after electrolyte solution dipping (gf/2cm) | Interfacial resistance ($\Omega \cdot cm^2$) | Interfacial resistance after electrolyte solution dipping ($\Omega \cdot cm^2$) |
|---|---|---|---|---|
| Example 1 | 212 | 233 | 0.22 | 0.37 |
| Example 2 | 196 | 214 | 0.25 | 0.68 |
| Example 3 | 190 | 221 | 0.29 | 0.69 |
| Example 4 | 182 | 194 | 0.20 | 0.31 |
| Comparative Example 1 | 64 | NG, Swelling occurred between electrode layer and current collector | 0.27 | 2.81 |
| Comparative Example 2 | 58 | NG, Swelling occurred between electrode layer and current collector | 0.30 | 2.03 |
| Comparative Example 3 | 83 | NG, Swelling occurred between electrode layer and current collector | 0.25 | 2.69 |

Referring to TABLE 1, it was confirmed that when compared with the electrodes of Comparative Examples 1 to 3 including no modified polyethylene or including ordinary polyethylene, or including modified polyolefin in an amount outside of the range between 2 and 40 parts by weight (based on 100 parts by weight of the binder), the electrodes of Examples 1 to 4 including the modified polyethylene had a remarkable increase in adhesion strength and adhesion strength after electrolyte solution dipping, and exhibited a very low value in interfacial resistance and interfacial resistance after electrolyte solution dipping.

**Claims**

1. An electrode comprising:

    an electrode current collector; and
    an electrode layer disposed on the electrode current collector, and including an active material, a conductive material and a binder,
    wherein the binder includes a fluorine-based polymer and a modified polyolefin,
    wherein the fluorine-based binder is polytetrafluoroethylene (PTFE),
    wherein the modified polyolefin includes a carboxylic acid anhydride derived functional group, and
    wherein an amount of the modified polyolefin is from 2 to 40 parts by weight based on 100 parts by weight of the binder.

2. The electrode according to claim 1, wherein the amount of the modified polyolefin is from 3 to 40 parts by weight based on 100 parts by weight of the binder.

3. The electrode according to claim 1, wherein a Melt Index (MI) of the modified polyolefin is 50g/10min or less.

4. The electrode according to claim 1, wherein a melting point of the modified polyolefin is 175°C or less.

5. The electrode according to claim 1, wherein the modified polyolefin includes at least one of a modified polyethylene or a modified polypropylene.

6. The electrode according to claim 1, wherein the modified olefin is a polymer including an olefin derived repeat unit, the olefin derived repeat unit is derived from an olefin including at least one of ethylene or propylene, and
    wherein the carboxylic acid anhydride derived functional group is derived from carboxylic acid anhydride including maleic anhydride, glutaric anhydride, phthalic anhydride, trimellitic anhydride, pyromellitic monoanhydride, pyromellitic dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride or two or more of them.

7. The electrode according to claim 1, wherein the modified polyolefin is a modified polyethylene.

8. The electrode according to claim 1, wherein the modified polyolefin includes at least one of polyethylene including a maleic anhydride derived functional group or polypropylene including a maleic anhydride derived functional group.

9. The electrode according to claim 1, wherein an amount of the carboxylic acid anhydride derived functional group in the modified polyolefin is from 0.5 to 20 mol%.

10. The electrode according to claim 1, wherein the binder is fibrillated and binds the active material and the conductive material.

11. The electrode according to claim 1, wherein the active material is a positive electrode active material or a negative electrode active material.

12. The electrode according to claim 1, wherein an amount of the active material is from 80 to 98 parts by weight, an amount of the conductive material is from 0.5 to 10 parts by weight, an amount of the fluorine-based polymer is from 0.5 to 5 parts by weight, and the amount of the modified polyolefin is from 0.02 to 3.3 parts by weight.

13. The electrode according to claim 1, wherein the electrode current collector does not include a conductive primer layer on at least one surface.

14. The electrode according to claim 1, wherein the electrode layer is derived from a dry electrode film.

15. A method for manufacturing the electrode of claim 1, the method comprising:

    preparing a mixture including an active material, a conductive material and a binder, wherein the binder includes a fluorine-based polymer and a modified polyolefin, and the fluorine-based binder is polytetrafluoroethylene (PTFE);

kneading the mixture in a range between 70°C and 200°C under a pressure that is equal to or higher than atmospheric pressure to prepare a mixture mass;

grinding the mixture mass to obtain an electrode mixture powder;

feeding the electrode mixture powder between a plurality of rolls and calendaring to form an electrode film; and

laminating the electrode film onto a metal current collector.

16. The method for manufacturing the electrode according to claim 15, wherein the kneading to prepare the mixture mass is performed in a kneader under the pressure that is equal to or higher than atmospheric pressure.

17. The method for manufacturing the electrode according to claim 15, wherein a compaction ratio of the electrode film is 20% or less.

18. A secondary battery comprising:

a positive electrode, a negative electrode, and a separator between the positive electrode and the negative electrode, wherein at least one of the positive electrode or the negative electrode is the electrode of any one of claims 1 to 14.

19. An energy storage system comprising the secondary battery according to claim 18 as a unit cell.

FIG. 1a

<u>100</u>

FIG. 1b

<u>100</u>

FIG. 2

## INTERNATIONAL SEARCH REPORT

| | International application No. |
| --- | --- |
| | **PCT/KR2023/022030** |

### A. CLASSIFICATION OF SUBJECT MATTER

**H01M 4/62**(2006.01)i; **H01M 4/13**(2010.01)i; **H01M 4/139**(2010.01)i; **H01M 4/04**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/62(2006.01); C08L 79/08(2006.01); H01G 11/28(2013.01); H01G 11/68(2013.01); H01M 10/0525(2010.01); H01M 4/02(2006.01); H01M 4/04(2006.01); H01M 4/131(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 전극(electrode), 불소계 고분자(fluorine-based polymer), 변성 폴리올레핀(modified polyolefin)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2007-026984 A (DAIDO METAL CO., LTD.) 01 February 2007 (2007-02-01)<br>See abstract; paragraphs [0014] and [0018]-[0021]; and claims 1 and 4. | 1-19 |
| Y | JP 2012-204203 A (MITSUI CHEMICALS INC.) 22 October 2012 (2012-10-22)<br>See paragraphs [0027]-[0029], [0033]-[0039], [0048], [0075] and [0093]-[0094]; and claims 1, 4-5, 7 and 9. | 1-19 |
| A | JP 5358754 B1 (MITSUI CHEMICALS, INC.) 04 December 2013 (2013-12-04)<br>See entire document. | 1-19 |
| A | KR 10-2022-0158240 A (GRST INTERNATIONAL LIMITED) 30 November 2022 (2022-11-30)<br>See entire document. | 1-19 |
| A | KR 10-2015-0036659 A (FURUKAWA ELECTRIC CO., LTD. et al.) 07 April 2015 (2015-04-07)<br>See entire document. | 1-19 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2024** | **15 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/022030**

| Patent document cited in search report | | | Publication date (day/month/year) | Patent family member(s) | | | Publication date (day/month/year) |
|---|---|---|---|---|---|---|---|
| JP | 2007-026984 | A | 01 February 2007 | JP | 4931383 | B2 | 16 May 2012 |
| | | | | US | 2007-0020514 | A1 | 25 January 2007 |
| JP | 2012-204203 | A | 22 October 2012 | JP | 2014-204203 | A5 | 24 April 2014 |
| | | | | JP | 5684620 | B2 | 18 March 2015 |
| JP | 5358754 | B1 | 04 December 2013 | JP | 2015-132864 | A1 | 30 July 2015 |
| | | | | TW | 43840 | A | 01 November 2013 |
| | | | | WO | 2013-132864 | A1 | 12 September 2013 |
| KR | 10-2022-0158240 | A | 30 November 2022 | CA | 3183234 | A1 | 23 September 2021 |
| | | | | CN | 114424365 | A | 29 April 2022 |
| | | | | EP | 4088331 | A1 | 16 November 2022 |
| | | | | JP | 2023-517376 | A | 25 April 2023 |
| | | | | TW | 202143536 | A | 16 November 2021 |
| | | | | US | 2023-0073006 | A1 | 09 March 2023 |
| KR | 10-2015-0036659 | A | 07 April 2015 | CN | 104428928 | A | 18 March 2015 |
| | | | | CN | 104428928 | B | 13 April 2018 |
| | | | | EP | 2874215 | A1 | 20 May 2015 |
| | | | | EP | 2874215 | A4 | 24 June 2015 |
| | | | | JP | 2016-010708 | A1 | 23 June 2016 |
| | | | | JP | 6220784 | B2 | 25 October 2017 |
| | | | | TW | 201415699 | A | 16 April 2014 |
| | | | | US | 2015-0221452 | A1 | 06 August 2015 |
| | | | | US | 9741498 | B2 | 22 August 2017 |
| | | | | WO | 2014-010708 | A1 | 16 January 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220188383